# EUROPÄISCHE PATENTSCHRIFT

(11) **EP 1 141 033 B1**
(45) Veröffentlichungstag und Bekanntmachung des Hinweises auf die Patenterteilung: **06.10.2004**
(21) Anmeldenummer: 99964585.6
(22) Anmeldetag: 16.12.1999
(51) Int. Cl.: C08F 2/38, C08F 220/18, C08F 220/10, C08F 293/00

(54) **VERFAHREN ZUR HERSTELLUNG EINES POLYMEREN UMSETZUNGSPRODUKTS**
METHOD FOR PRODUCING A POLYMER REACTION PRODUCT
PROCEDE DE PRODUCTION D'UN PRODUIT DE REACTION POLYMERE

(30) Priorität: 18.12.1998 DE 19858708; 05.03.1999 DE 19909803
(43) Veröffentlichungstag der Anmeldung: 10.10.2001
(73) Patentinhaber: BASF Coatings AG, 48165 Münster (DE); BASF AKTIENGESELLSCHAFT, 67056 Ludwigshafen (DE)
(72) Erfinder: BREMSER, Wolfgang, D-48165 Münster (DE); STRICKMANN, Frank, D-48565 Steinfurt (DE); BENDIX, Maximilian, D-59302 Oelde (DE); PAULUS, Wolfgang, D-55270 Ober-Olm (DE); RAETHER, Roman, Benedikt, D-67117 Limburgerhof (DE); CHRISTIE, David, D-68165 Mannheim (DE)
(74) Vertreter: Bardehle, Heinz, Dipl.-Ing.
(86) Internationale Anmeldenummer: PCT/EP1999/010015
(87) Internationale Veröffentlichungsnummer: WO 2000/037507

(56) Entgegenhaltungen:
- EP-A- 0 218 436
- EP-A- 0 597 747
- EP-A- 0 732 359
- WO-A-91/06535
- WO-A-93/22351
- WO-A-93/22355
- WO-A-95/12568
- WO-A-96/15157
- WO-A-97/13792
- US-A- 5 385 996

## Beschreibung

Die vorliegende Erfindung betrifft ein Verfahren zur Herstellung eines Umsetzungsprodukts (A) durch Reaktion unter radikalischen Bedingungen mindestens eines radikalisch umsetzbaren Monomers (a) in Gegenwart mindestens eines radikalischen Initiators sowie einer Verbindung (I), wie nachstehend definiert, in wäßriger Phase, dieses Umsetzungsprodukt an sich, ein Verfahren zur Herstellung eines Polymers unter Verwendung dieses Umsetzungsprodukts, sowie deren Verwendung in Polymerdispersionen.

Die vorliegende Erfindung liegt auf dem technischen Gebiet der radikalischen Polymerisation, die Merkmale aufweist, die typisch für ein lebendes Polymerisationssystem sind, wobei das erfindungsgemäße Verfahren prinzipiell in der Lage ist, Umsetzungsprodukte bzw. Polymere bereit zu stellen, die eine enge Molekulargewichtsverteilung (M_{w}/Mₙ) aufweisen können. Darüber hinaus können durch entsprechende Auswahl an Monomeren und ggf. aufeinanderfolgende Zugabe von verschiedenen Monomeren sowohl unverzweigte als auch verzweigte Homo- und Copolymere sowie Blockcopolymere hergestellt werden. Dabei betrifft die vorliegende Erfindung neben den Polymeren an sich auch ein in einer ersten Stufe erhaltenes Umsetzungsprodukt.

Seit einigen Jahren besteht ein starkes Interesse an Verfahren bzw. Verfahrenskonzepten, die sich zur Herstellung einer Vielzahl von Polymeren eignen und es ermöglichen, derartige Polymere mit vorbestimmter Struktur, Molekulargewicht und Molekulargewichtsverteilung bereit zu stellen.

So beschreibt die WO 98/01478 ein Verfahren zur Herstellung von Polymeren, bei dem das umzusetzende Monomer, das insbesondere unter Vinylmonomeren und ungesättigte Gruppen aufweisenden Säurederivaten, wie z.B. Anhydride, Ester und Imide der (Meth)acrylsäure ausgewählt wird, in Gegenwart eines radikalischen Starters und einer Thiocarbonylthio-Verbindung als Kettenübertragungsmittel umgesetzt wird.

Die WO 92/13903 beschreibt ein Verfahren zur Herstellung von Polymeren mit einem niedrigen Molekulargewicht durch Radikalkettenpolymerisation von einem oder mehreren Monomeren in Gegenwart eines Gruppenübertragungsmittels, wie darin definiert, das eine C-S-Doppelbindung aufweist. Ausweislich dieser Druckschrift wirken die dort beschriebenen, eine C-S-Doppelbindung aufweisenden Verbindungen nicht nur als Kettenübertragungsmittel, sondern auch als Wachstumsregler, so daß es gemäß dieser Druckschrift lediglich möglich ist, in Gegenwart dieser Verbindung Polymere mit niedrigem Molekulargewicht herzustellen.

Ein Verfahren zur Radikalkettenpolymerisation ungesättigter Monomere in wäßrigem Medium und in Anwesenheit eines Makromonomers mit einer -CH₂-C(X)=CH₂-Endgruppe, in der X wie darin definiert ist, wird in der WO 93/22351 beschrieben. Ausweislich der Beispiele dieser Anmeldung werden dort jeweils verschiedene (Meth)acrylate bzw. (Meth)acrylsäure und ggf. Monomere wie Styrol unter Emulsions- oder Suspensionspolymerisations-Bedingungen umgesetzt.

Die WO 93/22355 betrifft ein Verfahren zur Herstellung vernetzbarer Polymere unter Verwendung eines Makromonomers wie in der WO 93/22351 beschrieben.

Die WO 96/15157 beschreibt ebenfalls ein Verfahren zur Herstellung von Polymeren mit vergleichsweise enger Molekulargewichtsverteilung, in dem ein Vinylmonomer, wie darin definiert, mit einem ebenfalls Vinyl-terminierten Makromonomer in Anwesenheit eines radikalischen Initiators umgesetzt wird.

Femer betrifft die WO 98/37104 die Herstellung von bzgl. des Molekulargewichts kontrollierten Polymeren, u.a. solchen auf Acrylat-Basis, durch radikalische Polymerisation von entsprechenden Monomeren unter Verwendung eines darin näher definierten Kettenübertragungsmittels mit einer C-C-Doppelbindung und Resten, die diese Doppelbindung bzgl. der radikalischen Anlagerung von Monomeren aktivieren.

Eine Radikalkettenpolymerisation bzw. -copolymerisation mit einem ω-ungesättigten Oligo(methylmethacrylat) mit Ethylacrylat, Styrol, Methylmethacrylat, Acrylnitril und Vinylacetat als Copolymere wird in einem wissenschaftlichen Artikel in J. Macromol. scl.-chem., A 23 (7), 839-852 (1986) beschrieben.

In Anbetracht dieses Standes der Technik lag die Aufgabe der vorliegenden Erfindung darin, ein neues Verfahren zur Herstellung eines ebenfalls u.a. als Makroinitiator verwendbaren Umsetzungsprodukts bereit zu stellen, das zum einen selbst als Emulgator oder Dispergator anwendbar ist und mit dessen Hilfe auch weitere radikalisch homo- oder copolymerisierbare Monomere umgesetzt werden können, um zu weiteren, gegebenenfalls anders zusammengesetzten Polymeren zu gelangen. Ferner lag der vorliegenden Erfindung die Aufgabe zugrunde, eine gezielte Einstellung von Eigenschaften von Polymeren und dadurch eine vielseitige Einsatzmöglichkeit solcher Polymere, die erhältlich sind durch einfache radikalische Polymerisation, zu ermöglichen, insbesondere durch Herstellung von Blockstrukturen mittels radikalischer Polymerisation bereitzustellen.

Diese und weitere Aufgaben werden durch das erfindungsgemäße Verfahren zur Herstellung eines Umsetzungsprodukts (A), das die folgende Stufe (i) umfaßt:
(i) Reaktion unter radikalischen Bedingungen eines Reaktionsgemischs, umfassend mindestens ein radikalisch umsetzbares Monomer (a) in Gegenwart mindestens eines radikalischen Initiators sowie einer Verbindung (I), der Formel 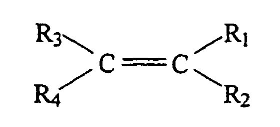 wobei R₁ bis R₄ jeweils unabhängig voneinander Wasserstoff, einen jeweils unsubstituierten oder substituierten Alkylrest, Cycloalkylrest, Aralkylrest, einen unsubstituierten oder einen substituierten aromatischen Kohlen-wasserstoffrest darstellen, mit der Maßgabe, daß mindestens zwei der R₁ bis R₄ einen unsubstituierten oder einen substituierten aromatischen Kohlenwasserstoffrest darstellen,
   in wäßriger Phase,
   gelöst.

Ferner betrifft die Erfindung ein Umsetzungsprodukt (A), das mittels eines Verfahrens umfassend die folgende Stufe (i) herstellbar ist:
(i) Reaktion unter radikalischen Bedingungen eines Reaktionsgemischs, umfassend mindestens ein radikalisch umsetzbaren Monomers (a) in Gegenwart mindestens eines radikalischen Initiators sowie einer Verbindung (I), der Formel 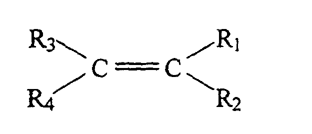 wobei R₁ bis R₄ jeweils unabhängig voneinander Wasserstoff, einen jeweils unsubstituierten oder substituierten Alkylrest, Cycloalkylrest, Aralkylrest, einen unsubstituierten oder einen substituierten aromatischen Kohlenwasserstoffrest darstellen, mit der Maßgabe, daß mindestens zwei der R₁ bis R₄ einen unsubstituierten oder einen substituierten aromatischen Kohlenwasserstoffrest darstellen,
   in wässriger Phase.
Im Rahmen des obigen erfindungsgemäßen Verfahrens können alle radikalisch umsetzbaren, Monomere als Monomer (a) eingesetzt werden. Vorzugsweise werden als Monomer (a) solche radikalisch homo- oder copolymerisierbaren Verbindungen eingesetzt, die eine hydrophile Gruppe, wie z.B. eine Carboxylgruppe umfassen. Weiter bevorzugt handelt es sich bei den Monomeren (a) um hydrophile, radikalisch homo- oder copolymerisierbare Monomere, d.h. um Monomere, deren Löslichkeit in Wasser höher als die von Styrol ist. Selbstverständlich können auch Gemische verschiedener hydrophiler Monomere, sowie Gemische aus mindestens einem hydrophilen Monomer und mindestens einem hydrophoben Monomer im Reaktionsgemisch gemäß Stufe (i) vorhanden sein. Im einzelnen sind als Monomere (a) zu nennen:

Methylmethacrylat, Ethylmethacrylat, Propylmethacrylat (alle Isomere), Butylmethacrylat (alle Isomere), 2-Ethylhexylmethacrylat, Isobornylmethacrylat, Methacrylsäure, Benzylmethacrylat, Phenylmethacrylat, Methacrylnitril, alpha-Methylstyrol, Methylacrylat, Ethylacrylat, Propylacrylat (alle Isomere), Butylacrylat (alle Isomere), 2-Ethylhexylacrylat, Isobornylacrylat, Acrylsäure, Benzylacrylat, Phenylacrylat, Acrylnitril, Styrol, funktionalisierte Methacrylate; Acrylsäuren und Styrole, ausgewählt unter Glycidylmethacrylat, 2-Hydroxyethylmethacrylat, Hydroxypropylmethacrylat (alle Isomere), Hydroxybutylmethacrylat (alle Isomere), Diethylaminoethylmethacrylat, Triethylenglycolmethacrylat, Itaconanhydrid, Itaconsäure, Glycidylacrylat, 2-Hydroxyethylacrylat, Hydroxypropylacrylat (alle Isomere), Hydroxybutylacrylat (alle Isomere), Diethylaminoethylacrylat, Triethylenglycolacrylat, Methacrylamid, N-tert.-Butylmethacrylamid, N-n-Butylmethacrylamid, N-Methylolmethacrylamid, N-Ethylolmethacrylamid, N-tert-Butylacrylamid, N-Butylacrylamid, N-Methylolacrylamid, N-Ethylolacrylamid, Vinylbenzoesäure (alle Isomere), Diethylaminostyrol (alle Isomere), alpha-Methylvinylbenzoesäure (alle Isomere), Diethylamino-alpha-methylstyrol (alle Isomere), paramethylstyrol, p-Vinylbenzolsulfonsäure, Trimethoxysilylpropylmethacrylat, Triethoxysilylpropylmethacrylat, Tributoxysilylpropylmethacrylat, Diethoxymethylsilylpropylmethacrylat, Dibutoxymethylsilylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilylpropylmethacrylat, Trimethoxysilylpropylacrylat, Triethoxysilylpropylacrylat, Tributoxysilylpropylacrylat, Dimethoxymethylsilylpropylacrylat, Diethoxymethylsilylpropylacrylat, Dibutoxymethylsilylpropylacrylat, Diisopropoxymethylsilylpropylacrylat, Dimethoxysilylpropylacrylat, Diethoxysilylpropylacrylat, Dibutoxysilylpropyl-acrylat, Diisopropoxysilylpropylacrylat, Vinylacetat und Vinylbutyrat, Vinylchlorid, Vinylfluorid, Vinylbromid, sowie Gemische vorstehend genannter Monomere.

Vorzugsweise finden als ein erstes Monomer (a') Acryl- oder Methacrylsäure, ein C₁- bis C₄-Alkyl- oder -Hydroxyalkylacrylat oder -methacrylat, Vinylacetat, ein substituiertes oder unsubstituiertes Vinylpyrrolidon, ein Gemisch aus zwei oder mehr davon, oder ein Gemisch aus diesem ersten Monomer (a') mit mindestens einem weiteren radikalisch homo- oder copolymerisierbaren Monomer (a) Verwendung.

Weiterhin wird erfindungsgemäß bei der Herstellung des Umsetzungsprodukts (A) eine Verbindung (I) der Formel 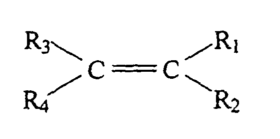 verwendet, wobei R₁ bis R₄ jeweils unabhängig voneinander Wasserstoff, einen jeweils unsubstituierten oder substituierten Alkylrest, Cycloalkylrest, Aralkylrest, einen unsubstituierten oder substituierten aromatischen Kohlenwasserstoffrest darstellen, wobei es erfindungsgemäß erforderlich ist, daß mindestens zwei der R₁ bis R₄ einen unsubstituierten oder substituierten aromatischen Kohlenwasserstoffrest darstellen.

Auch hier sind prinzipiell alle Verbindungen der o.g. Formel erfindungsgemäß einsetzbar. Vorzugsweise werden als Verbindung (I) Diphenylethylen, Dinaphthalinethylen, 4,4-Vinylidenbis(N,N'-dimethylanilin), 4,4-Vinylidenbis(amino-benzol), cis-, trans-Stilben oder ein Gemisch aus zwei oder mehr davon, weiter bevorzugt Diphenylethylen eingesetzt. Weiterhin können substituierte Diphenylethylene, die entweder an einem oder beiden aromatischen Kohlenwasserstoffresten mit elektronenziehenden oder elektronenschiebenden Substituenten, wie z.B. tert.-Butyl-, Benzyl- oder CN-Gruppen substituiert sind, oder ein Alkoxydiphenylethylen, wie z.B. Methoxy-, Ethoxy- oder tert.-Butyloxydiphenylethylen, analoge Thio- oder Aminverbindungen, eingesetzt werden.

Darüber hinaus wird das erfindungsgemäße Verfahren in Gegenwart mindestens eines radikalischen Initiators durchgeführt, wobei hier oxidierende radikalische Initiatoren bevorzugt sind. Vorzugsweise sollte der Initiator wasserlöslich sein. Im allgemeinen können jedoch alle bei der Radikalkettenpolymerisation herkömmlicherweise verwendeten Azo- und/oder Peroxo-Verbindungen eingesetzt werden. Geeignete Initiatoren sind in der WO 98/01478 auf S. 10, Z. 17-34 beschrieben, die diesbezüglich vollumfänglich in den Kontext der vorliegenden Anmeldung aufgenommen wird. Vorzugsweise werden oxidierende radikalische Initiatoren, wie z.B. Kalium-, Natrium- und Ammoniumperoxodisulfat, oder eine Kombination eines herkömmlichen, d.h. eines nicht oxidierenden Initiators mit H₂O₂, eingesetzt.

In einer bevorzugten Ausführungsform des erfindungsgemäßen Verfahrens wird eine vergleichsweise große Menge an radikalischem Initiator zugegeben, wobei der Anteil an radikalischem Initiator am Reaktionsgemisch vorzugsweise 0,5 bis 50 Gew.-%, weiter bevorzugt 1 bis 20 Gew.-%, jeweils bezogen auf die Gesamtmenge des Monomers (a) und des Initiators, beträgt. Vorzugsweise beträgt das Verhältnis Initiator zu Verbindung (I) 3:1 bis 1:3, weiter bevorzugt 2:1 bis 1:2, und insbesondere 1,5:1 bis 1:1,5.

Die oben beschriebene Reaktion gemäß Stufe (i) wird in wäßriger Phase, wobei hier Wasser oder Gemische von Wasser mit wassermischbaren Lösungsmitteln, wie z.B. THF und Ethanol bevorzugt sind, durchgeführt. Es ist jedoch auch möglich die Umsetzung in Gegenwart eines Gemischs aus Wasser und einem nicht mit Wasser mischbaren Lösungsmittel, z.B. einem aromatischen Lösungsmittel wie Toluol, durchzuführen.

In einer weiteren Ausführungsform wird die obige Reaktion gemäß Stufe (i) in Gegenwart mindestens einer Base durchgeführt. Dabei sind als niedermolekulare Basen prinzipiell alle niedermolekularen Basen zu verwenden, wobei NaOH, KOH, Ammoniak, Diethanolamin, Triethanolamin, Mono-, Di-, oder Triethylamin, Dimethylethanolamin, oder ein Gemisch aus zwei oder mehr davon bevorzugt und Ammoniak und Di- und Triethanolamin besonders bevorzugt sind.

Die Reaktion gemäß Stufe (i) wird im allgemeinen bei Temperaturen oberhalb Raumtemperatur und unterhalb der Zersetzungstemperatur der Monomeren durchgeführt, wobei vorzugsweise ein Temperaturbereich von 50 bis 150 °C, weiter bevorzugt 70 bis 120 °C und insbesondere 80 bis 110 °C gewählt wird.

Obwohl bzgl. der Molekulargewichtsverteilung keinerlei Beschränkungen existieren, kann in der Reaktion gemäß (i) ein Umsetzungsprodukt erhalten werden, das eine Molekulargewichtsverteilung M_{w}/Mₙ gemessen mit Gelpermeationschromatographie unter Verwendung von Polystyrol als Standard von ≤ 4, vorzugsweise ≤ 3, weiter bevorzugt ≤ 2, insbesondere ≤ 1,5 und in einzelnen Fällen auch ≤ 1,3 besitzt. Die Molekulargewichte des Umsetzungsprodukts (A) sind durch die Wahl der Verhältnisses Monomere (a) zu Verbindungen (I) zu radikalischem Initiator in weiten Grenzen steuerbar. Dabei bestimmt insbesondere der Gehalt an Verbindung (I) das Molekulargewicht, und zwar derart, daß je größer der Anteil an Verbindung (I) ist, desto geringer das erhaltene Molekulargewicht.

Die Umsetzung gemäß Stufe (i) kann auch in Gegenwart einer oberflächenaktiven Substanz durchgeführt werden.

Das in der Reaktion gemäß (i) erhaltene Umsetzungsprodukt, das in der Regel in Form eines wäßrigen Gemischs anfällt, kann dabei direkt als Dispersion weiter verarbeitet werden, oder aber als Makroinitiator für die weitere Umsetzung gemäß Stufe (ii), wie weiter unten hierin definiert, eingesetzt werden. Ferner ist es möglich, das Umsetzungsprodukt gemäß Stufe (i) als Feststoff zu isolieren und dann weiter umzusetzen oder einer Anwendung zuzuführen.

Dabei kann in der Umsetzung gemäß Stufe (ii) mindestens ein frei wählbares, radikalisch homo- oder copolymerisierbares Monomer (b) umgesetzt werden. Dabei kann Monomer (b) gleich oder verschieden sein vom in der Stufe (i) eingesetzten Monomer (a). Die Auswahl des Monomers (b) erfolgt prinzipiell nach der gewünschten Struktur des in Stufe (ii) hergestellten Polymers und damit in Abhängigkeit von der angestrebten Verwendung dieses Polymers.

Im einzelnen sind folgenden, vorzugsweise einzusetzende Monomere (b) zu nennen:

Monomere (b) werden vorzugsweise ausgewählt unter monoethylenisch ungesättigten C₃- bis C₁₀-Monocarbonsäuren, deren Alkalimetallsalzen und/oder Ammoniumsalzen, beispielsweise Acrylsäure, Methacrylsäure, Dimethylacrylsäure,
Ethylacrylsäure, Allylessigsäure oder Vinylessigsäure, weiterhin monoethylenisch ungesättigte C₄- bis C₈-Dicarbonsäuren, deren Halbester, Anhydride, Alkalimetallsalze und/oder Ammoniumsalze, beispielsweise Maleinsäure, Fumarsäure, Itaconsäure, Mesaconsäure, Methylenmalonsäure, Citraconsäure, Maleinsäureanhydrid, Itaconsäureanhydrid oder Methylmalonsäureanhydrid; weiterhin Sulfonsäuregruppen enthaltende monoethylenisch ungesättigte Monomere, beispielsweise Allylsulfonsäure, Styrolsulfonsäure, 2-Acryl-amido-2-methylpropan-sulfonsäure, Methallylsulfonsäure, Vinylsulfonsäure, Acrylsäure-3-sulfopropylester oder Methacrylsäure-3-sulfopropylester, weiterhin Phosphonsäuregruppen enthaltende monoethylenisch ungesättigte Monomere, beispielsweise Vinylphosphonsäure, Allylphosphonsäure oder Acrylamidoethylpropanphosphonsäure, C₁- bis C₂₀-Alkyl- und Hydroxialkylester von monoethylenisch ungesättigten C₃- bis C₁₀-Monocarbonsäuren oder C₄- bis C₈-Dicarbonsäuren, beispielsweise Methylacrylat, Ethylacrylat, n-Butylacrylat, Stearylacrylat, Maleinsäurediethylester, Hydroxyethylacrylat, Hydroxypropylacrylat, Hydroxybutylacrylat, Hydroxyethylmethacrylat oder Hydroxypropylmethacrylat, weiterhin (Meth)Acrylester von alkoxylierten C₁- bis C₁₈-Alkoholen, die mit 2 bis 50 mol Ethylenoxid, Propylenoxid, Butylenoxid oder Mischungen hiervon umgesetzt sind; weiterhin Amide und N-substituierte Amide von monoethylenisch ungesättigten C₃- bis C₁₀-Monocarbonsäuren oder C₄- bis C₈-Dicarbonsäuren, beispielsweise Acrylamid, N-Alkylacrylamide oder N,N-Dialkylacrylamide mit jeweils 1 bis 18 C-Atomen in der Alkylgruppe wie N-Methyacrylamid, N,N-Dimethylacrylamid, N-tert.-Butylacrylamid oder N-Octadecylacrylamid, Maleinsäuremonomethylhexylamid, Maleinsäuremonodecylamid, Diethylaminopropylmethacrylamid oder Acrylamidoglykolsäure; weiterhin Alkylamidoalkyl(meth)acrylate, beispielsweise Dimethylaminoethylacrylat, Dimethylaminoethylmethacrylat, Ethylaminoethylacrylat, Diethylaminoethylmethacrylat, Dimethylaminopropylacrylat oder Dimethylaminopropylmethacrylat, weiterhin Vinylester wie Vinylformiat, Vinylacetat oder Vinylpropionat, wobei diese nach der Polymerisation auch verseift vorliegen können; weiterhin N-Vinylverbindungen, beispielsweise N-Vinylpyrrolidon, N-Vinylaprolactam, N-Vinylformamid, N-Vinyl-N-methylformamid, 1-Vinylimidazol oder 1-Vinyl-2-methylimidazol; weiterhin Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid, Styrol oder dessen Derivate wie alpha-Methylstyrol, Inden, Dicyclopentadien; Monomere, die Amino- oder Iminogruppen aufweisen wie Dimethylaminoethylacrylat, Diethylaminoethylmethacrylat, Diethylaminopropylmethacryamid oder Allylamin, Monomere, die quaternäre Ammoniumgruppen tragen, z.B. vorliegend als Salze wie sie durch Umsetzung der basischen Aminofunktionen mit Säuren wie Salzsäure, Schwefelsäure, Salpetersäure, Ameisensäure oder Essigsäure erhalten werden, oder in quaternisierter Form (Beispiele geeigneter Quaternisierungsmittel sind Dimethylsulfat, Diethylsulfat, Methylchlorid, Ethylchlorid oder Benzylchlorid), wie z.B. Dimethylaminoethylacrylathydrochlorid, Diallyldimethylammoniumchlorid, Dimethylaminoethylacrylatmethylchlorid, Dimethylaminoethylaminopropylmethacrylamid-methosulfat, Vinylpyridiniumsalze oder 1-Vinylimidazoliumsalze; Monomere, bei denen die Aminogruppen und/oder Ammoniumgruppen erst nach der Polymerisation und anschließender Hydrolyse freigesetzt werden, wie beispielsweise N-Vinylformamid oder N-Vinylacetamid.

Demgemäß betrifft die vorliegende Erfindung auch ein Verfahren zur Herstellung eines Polymers (B), das umfaßt:

Umsetzung des in Stufe (i) erhaltenen Umsetzungsprodukts (A) unter radikalischen Bedingungen in Gegenwart mindestens einem radikalisch homo- oder copolymerisierbaren Monomer (b).

Die Umsetzung gemäß Stufe (ii) wird prinzipiell nach den üblichen Bedingungen für eine radikalische Polymerisation durchgeführt, wobei geeignete Lösungsmittel anwesend sein können.

Dabei können die Stufen (i) und (ii) im Rahmen des erfindungsgemäßen Verfahrens sowohl räumlich als auch zeitlich getrennt voneinander durchgeführt werden, wobei dann selbstverständlich zunächst Stufe (i) und anschließend Stufe (ii) durchgeführt wird. Darüber hinaus können jedoch die Stufen (i) und (ii) auch in einem Reaktor nacheinander, d.h. zunächst wird die Verbindung der Formel (I) mit mindestens einem Monomer (a) vollständig oder teilweise in Abhängigkeit von der gewünschten Anwendung bzw. der gewünschten Eigenschaften, umgesetzt und anschließend mindestens ein Monomer (b) zugegeben und radikalisch polymerisiert oder aber von Anfang an ein Monomerengemisch umfassend mindestens ein Monomer (a) und mindestens ein Monomer (b) eingesetzt und mit der Verbindung (I) zur Reaktion gebracht. Dabei wird angenommen, daß die Verbindung (I) zunächst mit dem mindestens einen Monomeren (a) reagiert und anschließend das daraus gebildete Umsetzungsprodukt (A) oberhalb eines bestimmten Molekulargewichts auch mit dem Monomeren (b) reagiert.

Je nach Reaktionsführung ist es dabei erfindungsgemäß möglich, an den Endgruppen funktionalisierte Polymere, Block- oder Multiblock- sowie Gradienten(Co)Polymere, sternförmige Polymere, Pfropf-Copolymere und verzweigte (Co)Polymere herzustellen.

Wie sich aus obigem ergibt, betrifft die vorliegende Erfindung auch das Polymer (B) an sich, das durch das oben definierte Verfahren herstellbar ist. Dabei wird die erfindungsgemäße Umsetzung vorzugsweise so durchgeführt, daß ein Polymer (B) erhalten wird, das Blockstruktur aufweist. Dabei ist es erfindungsgemäß zum ersten Mal möglich, in einfacher Weise unter Verwendung einer einfach zugänglichen Verbindung (I) Blockcopolymere bereitzustellen, die z.B. einen hydrophilen Block, wie z.B. einen (Meth)acrylsäure- oder einen C₁₋₄-Alkyl(meth)acrylat-Block und eine weiteren, vorzugsweise hydrophoben Polymer-Block, wie z.B. einen Block auf der Basis von vinylaromatischen Monomeren, wie z.B. Styrol oder substituierten Styrolen, sowie nichtaromatischen Vinylverbindungen, wie z.B. Vinylacetat, sowie höhere (> C₄) Alkyl(meth)acrylate aufweisen.

Ferner sind erfindungsgemäß auch Polymere der folgenden Struktur herstellbar:

Poly((meth)acrylsäure-stat-(meth)acrylat-b-(styrol-stat-(meth)acrylat)), wobei der Begriff "(meth)acrylat", Alkylester der Methacrylsäure und Acrylsäure bezeichnet.

Im einzelnen sind die folgenden, neuen Blockcopolymere zu nennen:

Poly(acrylsäure-b-styrol), Poly(methylmethacrylat-b-styrol), Poly(methacrylsäure - b-hydroxyethylacrylat), Poly(methacrylsäuremethylester-b-N-vinylpyrrolidon), Poly(methacrylsäuremethylester-b-N-vinylformamid), Poly(methacrylsäuremethylester-b-hydroxyethylacrylat), Poly(methacrylsäuremethylester-b-(styrolstat-acrylnitril)), Poly(n-butylacrylat-b-styrol-b-n-butylacrylat), Poly(methylmethacrylat-b-styrol-b-methylmethacrylat-b-styrol), Poly(n-butylacrylat-b-styrol-b-nbutylacrylat-b-styrol).

Darüber hinaus betrifft die vorliegende Erfindung auch ein wäßriges Gemisch, umfassend das erfindungsgemäße Umsetzungsprodukt (A), das erfindungsgemäße Polymer (B) oder eine Kombination aus zwei oder mehr davon.

Insbesondere läßt sich das wäßrige Gemisch, das das Umsetzungsprodukt (A) enthält, als Primärdispersion verwenden. Das Umsetzungsprodukt (A) bzw. das Polymer (B) oder ein Gemisch aus zwei oder mehr davon werden können entsprechend dem Einsatzgebiet in hierfür geeigneter Form, insbesondere in Polymerdispersionen, verwendet werden.

Im folgenden soll die vorliegende Erfindung nunmehr anhand einiger Beispiele erläutert werden.

### Beispiel 1

### Synthese von Poly(acrylsäure-b-styrol)

224 g Wasser und 15,4 g 25%-iger Ammoniak wurden auf 90 °C erhitzt. Durch 2 Tropftrichter wurden dann innerhalb von 30 Minuten parallel 3 g 1,1-Diphenylethylen in 45 g Acrylsäure gelöst und 4,73 g Ammoniumperoxodisulfat in 22,4 g Wasser gelöst, zugetropft. Der Ansatz wurde insgesamt 4 Stunden auf 90 °C gehalten.

101 g dieses Ansatzes wurde mit 25 g Wasser, 40 ml 25%-iger Ammoniak-Lösung und 38 g Styrol versetzt und anschließend 13 Stunden bei 90 °C gehalten.

Man erhielt ein weißes wasserquellbares Polymer.

### Beispiel 2

### Synthese von Poly(methylmethacrylat-b-styrol)

125 g 25%-iger Ammoniak-Lösung in 125 g Wasser wurden vorgelegt und das Ölbad auf 90 °C gehalten. Durch 2 Tropftrichter wurden dann innerhalb von 60 Minuten parallel 6 g 1,1-Diphenylethylen in 125 g Methylmethacrylat gelöst und 4,73 g Ammoniumperoxodisulfat in 22,4 g Wasser gelöst, zugetropft. Anschließend wurden noch einmal 4,73 g Ammoniumperoxodisulfat in 22,4 g Wasser gelöst, innerhalb einer Stunde zugetropft. Der Ansatz wurde dann noch eine weiter Stunde bei 90 °C gehalten.

Zu diesem Ansatz wurden noch 65 g Styrol gegeben und die Ölbadtemperatur auf 100 °C erhöht. Nach 4 Stunden erhielt man ein weißes wasserquellbares Polymer mit M_{w}=15.000 g/mol und einer Polydispersität von 1,5. Durch Elektronenmikroskopie wurde die Blockstruktur nachgewiesen.

### Beispiel 3

### Synthese von Poly(methacrylsäure-b-hydroxyethylacrylat)

112 g Wasser und 112 g 25%-igerAmmoniak-Lösung wurden vorgelegt und auf 90 °C erhitzt. Anschließend wurden 9,46 g Ammoniumperoxodisulfat in 45 g Wasser gelöst innerhalb von 30 Minuten und 6 g 1,1-Diphenylethylen in 107,5 g Methacrylsäure gelöst schnell zugetropft.

Anschließend wurden noch einmal 9,46 g Ammoniumperoxodisulfat in 45 g Wasser gelöst innerhalb von 30 Minuten zugetropft.

Nach der Zugabe wurde der Ansatz noch 5 Stunden bei 90 °C gehalten.

Anschließend wurde 1 mol Hydroxyethylacrylat zugegeben und der Ansatz 5 Stunden bei 85 °C gehalten.

Man erhielt ein wasserlösliches Polymer.

### Beispiel 4

### Synthese von Poly(methacrylsäuremethylester-b-N-vinylpyrrolidon)

360 g Wasser wurden vorgelegt und auf 90 °C gehalten. Anschließend wurden parallel 10 g 1,1-Diphenylethylen gelöst und in 200 g Methacrylsäuremethylester, und 10,3 g Ammoniumperoxodisulfat gelöst in 100 g Wasser innerhalb von 60 Minuten und 9,2 g 25%-ige Ammoniak-Lösung in 100 g Wasser gelöst innerhalb von 90 Minuten zugetropft. Der Ansatz wurde anschließend noch 3 Stunden bei 90 °C gehalten.

Danach wurden zu 100 g der oben beschriebenen Dispersion 20,4 g N-Vinylpyrrolidon gegeben und der Ansatz 6 Stunden bei 75 °C gehalten.

### Beispiel 5

### Synthese von Poly(methacrylsäuremethylester-b-N-vinylformamid)

360 g Wasser wurden vorgelegt und auf 90 °C gehalten. Anschließend wurden parallel 10 g 1,1-Diphenylethylen gelöst in 200 g Methacrylsäuremethylester, und 10,3 g Ammoniumperoxodisulfat gelöst in 100 g Wasser innerhalb von 60 Minuten und 9,2 g 25%-ige Ammoniak-Lösung in 100 g Wasser gelöst innerhalb von 90 Minuten zugetropft. Der Ansatz wurde anschließend noch 3 Stunden bei 90 °C gehalten.

Danach wurden zu 100 g der oben beschriebenen Dispersion 25 g N-Vinylformamid gegeben und der Ansatz 6 Stunden bei 75 °C gehalten.

### Beispiel 6

### Synthese von Poly(methacrylsäuremethylester-b-hydroxyethylacrylat)

360 g Wasser wurden vorgelegt und auf 90 °C gehalten. Anschließend wurden parallel 10 g 1,1-Diphenylethylen gelöst in 200 g Methacrylsäuremethylester, und 10,3 g Ammoniumperoxodisulfat gelöst in 100 g Wasser innerhalb von 60 Minuten und 9,2 g 25%-ige Ammoniak-Lösung in 100 g Wasser gelöst innerhalb von 90 Minuten zugetropft. Der Ansatz wurde anschließend noch 3 Stunden bei 90 °C gehalten.

Danach wurden zu 100 g der oben beschriebenen Dispersion 25 g Hydroxyethylacrylat gegeben und der Ansatz 6 Stunden bei 75 °C gehalten.

### Beispiel 7

### Synthese von Poly(methacrylsäuremethytester-b-(styrol-stat-acrylnitril))

360 g Wasser wurden vorgelegt und auf 90 °C gehalten. Anschließend wurden parallel 10 g 1,1-Diphenylethylen gelöst in 200 g Methacrylsäuremethylester, und 10,3 g Ammoniumperoxodisulfat gelöst in 100 g Wasser innerhalb von 60 Minuten und 9,2 g 25%-ige Ammoniak-Lösung in 100 g Wasser gelöst innerhalb von 90 Minuten zugetropft. Der Ansatz wurde anschließend noch 3 Stunden bei 90 °C gehalten.

Danach wurden zu 100 g der oben beschriebenen Dispersion 17,2 g Styrol und 1 g Acrylnitril zugegeben und der Ansatz 6 Stunden bei 75 °C gehalten.

Man erhielt ein Polymer mit M_{w} = 7.100 g/mol und einer Polydispersität von 2,7.

### Beispiel 8

### Synthese von Poly(n-butylacrylat-b-styrol-b-n-butylacrylat)

360 g Wasser wurde vorgelegt und das Ölbad auf 90 °C erhitzt. Durch 3 Tropftrichter wurden dann innerhalb von 180 Minuten parallel 11,1 g 1,1-Diphenylethylen in 256 g n-Butylacrylat gelöst und 10,7 g Natriumperoxodisulfat in 100 g Wasser gelöst, zugetropft und innerhalb von 120 Minuten 2,3 g Natriumhydroxid, gelöst in 100 g Wasser. Das Ölbad wurde insgesamt 6 Stunden auf 90 °C gehalten.

Nach Abtrennen der wäßrigen Phase wurden zum verbleibenden Polymer 138 g Styrol zugegeben und das Ölbad 6 Stunden auf 115 °C gehalten.

Anschließend wurden 169 g n-Butylacrylat zugegeben und das Ölbad 6 Stunden auf 115 °C gehalten.

Man erhielt ein Polymer mit M_{w} = 366.000 g/mol und einer Polydispersität von 2,6.

### Beispiel 9

### Synthese von Poly(methylmethacrylat-b-styrol)

180 g Wasser wurde vorgelegt und auf 90 °C gehalten. Dann wurden parallel aus 3 Tropftrichter 3 g cis-Stilben gelöst in 50 g Methylmethacrylat und 5 g 25%-ige Ammoniak-Lösung gelöst in 50 g Wasser in 60 Minuten zugetropft und 5,1 g Ammoniumperoxodisulfat gelöst in 50 g Wasser in 90 Minuten zugetropft.

Anschließend hielt man den Ansatz noch weitere 4,5 Stunden auf 90 °C. Man erhielt ein Polymer mit M_{w} = 54.200 g/mol und einer Polydispersität von 2,4.

70 g der oben beschriebenen Polymerdispersion wurden auf 115 °C erhitzt und 50 g Styrol zudosiert. Der Ansatz wurde dann 6 Stunden bei 115 °C gehalten.

Man erhielt ein Polymer mit M_{w} = 207.000 g/mol und einer Polydispersität von 3,1.

### Beispiel 10

### Synthese von Poly(methylmethacrylat-b-styrol)

180 g Wasser wurde vorgelegt und auf 90 °C gehalten. Dann wurden parallel aus 3 Tropftrichter 3 g trans-Stilben gelöst in 50 g Methylmethacrylat und 5 g 25%ige Ammoniak-Lösung gelöst in 50 g Wasser in 60 Minuten zugetropft und 5,1 g Ammoniumperoxodisulfat gelöst in 50 g Wasser in 90 Minuten zugetropft.

Anschließend hielt man den Ansatz noch weitere 4,5 Stunden auf 90 °C. Man erhielt ein Polymer mit M_{w} = 46.800 g/mol und einer Polydispersität von 2,9.

70 g der oben beschriebenen Polymerdispersion wurden auf 115°C erhitzt und 50 g Styrol zudosiert. Der Ansatz wurde dann 6 Stunden bei 115 °C gehalten.

Man erhielt ein Polymer mit M_{w} = 207.000 g/mol und einer Polydispersität von 4,2.

### Beispiel 11

### Synthese von Polymethacrylsäuremethylester (nur 1. Stufe)

180 g Wasser wurde vorgelegt und auf 90 °C gehalten. Dann wurden parallel aus 3 Tropftrichter 5 g 4,4-Vinylidenbis(N,N-dimethylanilin) gelöst in 100 g Methacrylsäuremethylester und 4,6 g 25%-ige Ammoniak-Lösung gelöst in 100 g Wasser innerhalb von 60 Minuten zugetropft und 5,1 g Ammoniumperoxodisulfat gelöst in 100 g Wasser innerhalb von 90 Minuten zugetropft.

Den Ansatz wurde weitere 4 Stunden auf 90 °C gehalten.

Man erhielt ein Polymer mit M_{w} = 2.150 g/mol und einer Polydispersität von 1,2.

### Beispiel 12

In einem Reaktionsgefäß wurden 52,56 g VE-Wasser vorgelegt und auf 90 °C aufgeheizt. Anschließend wurden bei einer konstanten Temperatur von 90 °C drei separate Zuläufe parallel und gleichmäßig zudosiert. Zulauf 1 bestand aus 10,18 g Acrylsäure, 18,35 g Methylmethacrylat und 1,49 g Diphenylethylen. Als Zulauf 2 wurden 9,9 g einer 25 Gew.-%-igen Ammoniak-Lösung zugegeben. Zulauf 3 bestand aus einer Lösung von 2,25 g Ammoniumperoxodisulfat in 5,25 g VE-Wasser. Zuläufe I und II wurden innerhalb von 1 Stunde zudosiert, Zulauf III wurde innerhalb von 1,25 Stunden zudosiert. Nach Beenden der Zugabe schloß sich eine 4-stündige Nachpolymerisationsphase unter Kühlung an. Die erhaltene micellare Lösung wies einen Festkörpergehalt von 33 Gew.-% auf.

### Beispiel 13

Zunächst wurden 9,1 g des in Beispiel 12 hergestellten Produkts in 51,62 g VE-Wasser vorgelegt und unter Rühren in einem Reaktor auf 90 °C erwärmt. Anschließend wurde ein Zulauf, bestehend aus 16,19 g n-Butylmethacrylat, 14,21 g Styrol und 8,88 g Ethylhexylmethacrylat unter intensivem Rühren innerhalb von 6 Stunden zudosiert. Die erhaltene Dispersion wies einen Festkörpergehalt von 42 Gew.-% auf.

### Beispiel 14

In einem 5-kg Stahlreaktor wurden 906,0 g VE-Wasser vorgelegt und auf 90 °C aufgeheizt. Anschließend wurden bei einer konstanten Temperatur von 90 °C drei separate Zuläufe parallel und gleichmäßig innerhalb von 4 Stunden zudosiert. Zulauf I bestand aus 457,6 g Ethylacrylat, 215,3 g Acrylsäure und 20,2 g Diphenylethylen. Zulauf II war eine Lösung von 40,4 g Ammoniumperoxodisulfat in 94,2 g VE-Wasser. Zulauf III war zusammengesetzt aus 133,2 g Dimethylethanolamin und 133,2 g VE-Wasser. Nach beendeter Zugabe schloß sich eine 2-stündige Nachpolymerisationsphase bei 90 °C an. Man erhielt eine leicht orange, klare Lösung, die einen pH-Wert von 5,2, eine Viskosität von 5,2 dPas, einen Feststoffgehalt (60 Minuten, bei 130 °C) von 40,3 % und eine alkoholisch bestimmte Säurezahl von 246 mg KOH/g Substanz aufwies.

### Beispiel 15

In einem 5-kg Stahlreaktor wurden 800,0 g der in Beispiel 14 hergestellten wäßrigen Lösung vorgelegt und auf 90 °C erwärmt. Dazu wurde innerhalb von 30 Minuten eine Lösung bestehend aus 83,2 g Ethylacrylat, 67,2 g n-Butylacrylat, 80,0 g Styrol und 89,6 g Hydroxypropylmethacrylat dosiert und nach beendeter Zugabe 5 Stunden bei 90 °C thermolysiert. Man erhielt eine leicht orange Lösung, die einen pH-Wert von 5,3, eine Viskosität von 8,4 dPas, einen Feststoffgehalt (60 Minuten, bei 130 °C) von 39,7 % und eine alkoholisch bestimmte Säurezahl von 133 mg KOH/g Substanz aufwies.

### Beispiel 16

In einem 5-kg Stahlreaktor wurden 528,7 g VE-Wasser vorgelegt und auf 90 °C aufgeheizt. Anschließend wurden bei einer konstanten Temperatur von 90° drei separate Zuläufe parallel und gleichmäßig innerhalb von 4 Stunden zudosiert. Zulauf I bestand aus 106,2 g MA-13, 378,1 g n-Butylmethacrylat, 159,3 g Styrol, 54,5 g Acrylsäure, 332,4 g Methylmethacrylat und 31,9 g Diphenylethylen. Zulauf II war eine Lösung von 42,5 g Ammoniumperoxodisulfat in 170 g VE-Wasser. Zulauf III enthielt 51,61 g Dimethylethanolamin. Nach beendeter Zugabe schloß sich eine 2-stündige Nachpolymerisationsphase bei 90 °C an. Nach dem Abkühlen erhielt man eine weiße Dispersion, die einen pH-Wert von 5,5, einen Feststoffgehalt (60 Minuten, 130 °C) von 41 %, eine alkoholisch bestimmte Säurezahl von 58 mg KOH/g Substanz und eine Viskosität von 0,9 dPas (23 °C, Kegel/Platte) aufwies. Das Molekulargewicht wurde mittels GPC gegen Polystyrol als Standard bestimmt und betrug Mₙ 4406 g/mol, M_{w} 8603 g/mol, Polydispersität 1,95.
MA-13: Methacrylsäureester 13.0 Röhm

## Patentansprüche

1. Verfahren zur Herstellung eines Umsetzungsprodukts (A), das die folgende Stufe (i) umfaßt:
(i) Reaktion unter radikalischen Bedingungen eines Reaktionsgemischs, umfassend mindestens ein radikalisch umsetzbares Monomers (a) in Gegenwart mindestens eines radikalischen Initiators sowie einer Verbindung (I), der Formel 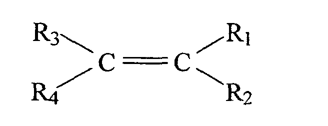 wobei R₁ bis R₄ jeweils unabhängig voneinander Wasserstoff, einen jeweils unsubstituierten oder substituierten Alkylrest, Cycloalkylrest, Aralkylrest, einen unsubstituierten oder einen substituierten aromatischen Kohlenwasserstoffrest darstellen, mit der Maßgabe, daß mindestens zwei der R₁ bis R₄ einen unsubstituierten oder einen substituierten aromatischen Kohlenwasserstoffrest darstellen,
in wäßriger Phase.

2. Verfahren nach Anspruch 1, wobei die Reaktion in Gegenwart mindestens einer Base durchgeführt wird.

3. Verfahren nach Anspruch 1 oder 2, wobei die Verbindung (I) Diphenylethylen, ein Alkoxydiphenylethylen, Dinaphthalinethylen, 4,4-Vinylidenbis(N,N-dimethylanilin), 4,4-Vinylidenbis(1-aminobenzol), cis-, trans-Stilben oder ein Gemisch aus zwei oder mehr davon ist.

4. Verfahren nach einem der Ansprüche 1 bis 3, wobei als Monomer (a) ein hydrophiles Monomer, ein Gemisch umfassend mindestens zwei hydrophile Monomere oder ein Gemisch umfassend mindestens ein hydrophiles und mindestens ein hydrophobes Monomer eingesetzt wird.

5. Verfahren nach einem der Ansprüche 1 bis 4, wobei die niedermolekulare Base NaOH, KOH, Ammoniak, Diethanolamin, Triethanolamin, Mono-, Di-, oder Triethylamin, Dimethylethanolamin, oder ein Gemisch aus zwei oder mehr davon ist.

6. Verfahren zur Herstellung eines Polymers (B), das umfaßt:
(ii) Umsetzung des in Stufe (i) erhaltenen Umsetzungsprodukts (A) unter radikalischen Bedingungen in Gegenwart von mindestens einem, radikalisch homo- oder copolymerisierbaren Monomer (b).

7. Umsetzungsprodukt (A), das mittels eines Verfahrens umfassend die folgende Stufe (i) herstellbar ist:
(i) Reaktion unter radikalischen Bedingungen eines Reaktionsgemischs, umfassend mindestens ein radikalisch umsetzbaren Monomers (a) in Gegenwart mindestens eines radikalischen Initiators sowie einer Verbindung (I), der Formel 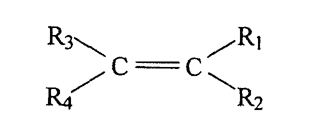 wobei R₁ bis R₄ jeweils unabhängig voneinander Wasserstoff, einen jeweils unsubstituierten oder substituierten Alkylrest, Cycloalkylrest, Aralkylrest, einen unsubstituierten oder einen substituierten aromatischen Kohlenwasserstoffrest darstellen, mit der Maßgabe, daß mindestens zwei der R₁ bis R₄ einen unsubstituierten oder einen substituierten aromatischen Kohlenwasserstoffrest darstellen,
in wässriger Phase.

8. Polymer B, das durch ein Verfahren umfassend die Stufe (ii) herstellbar ist:
(ii) Umsetzung des in Stufe (i) erhaltenen Umsetzungsprodukts (A) unter radikalischen Bedingungen in Gegenwart von mindestens einem, radikalisch homo- oder copolymerisierbaren Monomer (b).

9. Wässriges Gemisch umfassend ein Umsetzungsprodukt (A) gemäß Anspruch 7 oder ein Polymer (B) gemäß Anspruch 8 oder eine Kombination aus zwei oder mehr davon.

10. Verwendung eines wässrigen Gemischs enthaltend das Umsetzungsprodukt (A) oder das Polymer B oder eine Kombination aus zwei oder mehr davon als Dispersion.

## Claims

1. A process for preparing a reaction product (A), comprising the following stage (i):
(i) reacting under free-radical conditions a reaction mixture comprising at least one free-radically reactable monomer (a) in the presence of at least one free-radical initiator and of a compound (I) of the formula 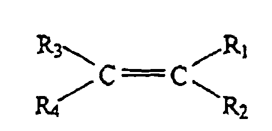 in which R₁ to R₄ each independently of one another are hydrogen, a substituted or unsubstituted alkyl radical, cycloalkyl radical or aralkyl radical, or an unsubstituted or a substituted aromatic hydrocarbon radical, with the proviso that at least two of R₁ to R₄ are an unsubstituted or a substituted aromatic hydrocarbon radical
in aqueous phase.

2. A process as claimed in claim 1, wherein the reaction is conducted in the presence of at least one base.

3. A process as claimed in claim 1 or 2, wherein said compound (I) is diphenylethylene, an alkoxydiphenylethylene, dinaphthaleneethylene, 4,4-vinylidenebis(N,N-dimethylaniline), 4,4-vinylidenebis(1-aminobenzene), cis- or trans-stilbene or a mixture of two or more thereof.

4. A process as claimed in any of claims 1 to 3, wherein said monomer (a) is a hydrophilic monomer, a mixture comprising at least two hydrophilic monomers or a mixture comprising at least one hydrophilic and at least one hydrophobic monomer.

5. A process as claimed in any of claims 1 to 4, wherein the low molecular mass base is NaOH, KOH, ammonia, diethanolamine, triethanolamine, mono-, di- or triethylamine, dimethylethanolamine or a mixture of two or more thereof.

6. A process for preparing a polymer (B), which comprises:
(ii) reacting the reaction product (A) obtained in stage (i) under free-radical conditions in the presence of at least one free-radically homopolymerizable or copolymerizable monomer (b).

7. A reaction product (A) preparable by means of a process comprising the following stage (i):
(i) reacting under free-radical conditions a reaction mixture comprising at least one free-radically reactable monomer (a) in the presence of at least one free-radical initiator and of a compound (I) of the formula 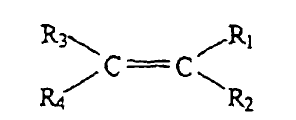 in which R₁ to R₄ each independently of one another are hydrogen, a substituted or unsubstituted alkyl radical, cycloalkyl radical or aralkyl radical, or an unsubstituted or a substituted aromatic hydrocarbon radical, with the proviso that at least two of R₁ to R₄ are an unsubstituted or a substituted aromatic hydrocarbon radical
in aqueous phase.

8. A polymer B preparable by a process comprising the stage (ii):
(ii) reacting the reaction product (A) obtained in stage (i) under free-radical conditions in the presence of at least one free-radically homopolymerizable or copolymerizable monomer (b).

9. An aqueous mixture comprising a reaction product (A) as claimed in claim 7 or a polymer (B) as claimed in claim 8 or a combination of two or more thereof.

10. The use of an aqueous mixture comprising the reaction product (A) or the polymer B or a combination of two or more thereof as a dispersion.

## Revendications

1. Procédé de production d'un produit de réaction (A), qui comprend l'étape (i) suivante :
(i) la réaction sous conditions radicalaires d'un mélange réactionnel, comprenant au moins un monomère (a) pouvant réagir de manière radicalaire en présence d'au moins un amorceur radicalaire ainsi que d'un composé (I), de formule 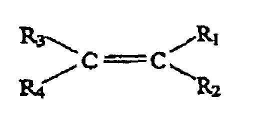 dans laquelle R₁ à R₄ représentent chacun indépendamment l'un de l'autre l'hydrogène, un reste alkyle non substitué ou substitué selon le cas, un reste cycloalkyle, un reste aralkyle, un reste hydrocarbure aromatique non substitué ou un substitué, dans la mesure où au moins deux des R₁ à R₄ représentent un reste hydrocarbure aromatique non substitué ou un substitué,
en phase aqueuse.

2. Procédé selon la revendication 1, dans lequel la réaction est effectuée en présence d'au moins une base.

3. Procédé selon la revendication 1 ou 2, dans lequel le composé (I) est le diphényléthylène, un alcoxydiphényléthylène, le dinaphtalène-éthylène, le 4,4-vinylidène-bis-(N,N'-diméthylaniline), le 4,4-vinylidène-bis-(1-aminobenzène), le cis-, le trans-stilbène ou un mélange de deux ou plus de ceux-ci.

4. Procédé selon une des revendications 1 à 3, dans lequel en tant que monomère (a), on utilise un monomère hydrophile, un mélange comprenant au moins deux monomères hydrophiles ou un mélange comprenant au moins un monomère hydrophile et au moins un hydrophobe.

5. Procédé selon une des revendications 1 à 4, dans lequel la base à poids moléculaire faible est NaOH, KOH, l'ammoniac, la diéthanolamine, la triéthanolamine, la mono-, di-, ou triéthylamine, la diméthyléthanolamine, ou un mélange de deux ou plusieurs de celles-ci.

6. Procédé de production d'un polymère (B), qui comprend :
(ii) la réaction du produit de réaction (A) obtenu dans l'étape (i) sous des conditions radicalaires en présence d'au moins un monomère (b) pouvant être homo- ou copolymérisé de manière radicalaire.

7. Produit de réaction (A), qui peut être produit au moyen d'un procédé comprenant l'étape (i) suivante :
(i) la réaction sous conditions radicalaires d'un mélange réactionnel, comprenant au moins un monomère (a) pouvant réagir de manière radicalaire en présence d'au moins un amorceur radicalaire ainsi que d'un composé (I), de formule 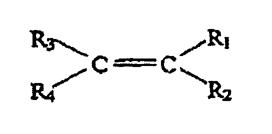 dans laquelle R₁ à R₄ représentent chacun indépendamment l'un de l'autre l'hydrogène, un reste alkyle non substitué ou substitué selon le cas, un reste cycloalkyle, un reste aralkyle, un reste hydrocarbure aromatique non substitué ou un substitué, dans la mesure où au moins deux des R₁ à R₄ représentent un reste hydrocarbure aromatique non substitué ou un substitué,
en phase aqueuse.

8. Polymère B, qui peut être produit par un procédé comprenant l'étape (ii) suivante :
(ii) la réaction du produit de réaction (A) obtenu dans l'étape (i) sous des conditions radicalaires en présence d'au moins un monomère (b) pouvant être homo- ou copolymérisé de manière radicalaire.

9. Mélange aqueux comprenant un produit de réaction (A) selon la revendication 7 ou un polymère (B) selon la revendication 8 ou une combinaison de deux ou plus de ceux-ci.

10. Utilisation d'un mélange aqueux contenant le produit de réaction (A) ou le polymère B ou une combinaison de deux ou plus de ceux-ci en tant que dispersion.
